# EUROPEAN PATENT APPLICATION

(11) **EP 3 508 837 A1**
(43) Date of publication of application: **10.07.2019**
(21) Application number: 18204148.3
(22) Date of filing: 02.11.2018
(51) Int. Cl.: G01N 21/57, G01N 21/84

(54) **EVALUATION DEVICE, IMAGE MEASUREMENT DEVICE, EVALUATION METHOD, AND CARRIER MEANS**

(30) Priority: 04.01.2018 JP 2018000284
(71) Applicant: Ricoh Company, Ltd., Tokyo 143-8555 (JP)
(72) Inventor: SOMA, Takashi, Tokyo (JP); SONE, Takuroh, Tokyo (JP); KIHARA, Hideyuki, Tokyo (JP); GOTOH, Takayuki, Tokyo (JP); IWAMATSU, Akihiro, Tokyo (JP); WATANABE, Shuhei, Tokyo (JP); HIROI, Takafumi, Tokyo (JP)
(74) Representative: Watkin, Timothy Lawrence Harvey

(57) **Abstract**

An evaluation device is configured to perform characteristic evaluation of a measurement surface of a measurement object based on a psychophysical quantity of the measurement surface. The evaluation device includes a first detector (26), a second detector (29, 30), and a determiner (31). The first detector (26) detects the psychophysical quantity of the measurement surface based on a captured image of the measurement surface. The second detector (29, 30) detects a psychophysical quantity difference between positions separated by a predetermined distance in the captured image. The determiner (31) performs error determination in a case where the psychophysical quantity difference between the positions separated by the predetermined distance is equal to or larger than a predetermined difference.

## Description

### BACKGROUND

### Technical Field

Embodiments of the present disclosure relate to an evaluation device, an image measurement device, an evaluation method, and carrier means storing program code for causing a computer to execute the method.

### Background Art

In recent years, paint containing luster material, which is used for painting cars, for example, is known. The painted surface coated with the paint containing a luster material differs in appearance depending on the viewing angle and the like due to the luster material. Currently, the appearance is diversified due to the variety of luster materials and painting methods.

The painted surface coated with the paint containing such a luster material is typically evaluated by visual observation. However, such an evaluation with visual observation is unstable and difficult to quantify because what the painted surface looks like varies depending on individuals.

Here, in the evaluation of the painted surface coated with the paint containing the luster material, evaluation by particle characteristics in which particle degree (also called glitter degree or luster degree) that is texture is quantified is particularly significant. JP-2000-304696-A discloses a luster degree quantitative evaluation device that calculates particle characteristics from a measurement image of a luster material-containing coated film to evaluate the particle characteristics of the luster material-containing coated film.

However, the evaluation of the particle characteristics is to binarize the measurement image (luminance image) on a measurement surface captured by a camera device with a predetermined threshold (luminance value) to extract and evaluate a region where the particles exist. Therefore, the luster degree quantitative evaluation device disclosed in JP-2000-304696-A and conventional evaluation devices have a disadvantage that luminance unevenness in the measurement image becomes large and accurate extraction of the region where the particles exist becomes difficult and a wrong particle characteristic evaluation value is calculated in a case where the measurement surface is inclined, in a case where a measuring instrument is inclined with respect to the measurement surface, or in a case where the measurement surface is damaged or dirty or the like.

If the wrong characteristic evaluation value is calculated, wrong particle characteristic evaluation is performed based on the wrong particle characteristic evaluation value and is not favorable.

### SUMMARY

In one aspect of this disclosure, there is provided an improved evaluation device configured to perform characteristic evaluation of a measurement surface of a measurement object based on a psychophysical quantity of the measurement surface. The evaluation device includes a first detector configured to detect the psychophysical quantity of the measurement surface based on a captured image of the measurement surface; a second detector configured to detect a psychophysical quantity difference between positions separated by a predetermined distance in the captured image; and a determiner configured to perform error determination in a case where the psychophysical quantity difference between the positions separated by the predetermined distance is equal to or larger than a predetermined difference.

In another aspect of this disclosure, there is provided an improved image measurement device comprising an imager configured to capture a captured image of a measurement surface of a measurement object; a first detector configured to detect a psychophysical quantity of the measurement surface based on the captured image; an evaluator configured to output the psychophysical quantity detected by the first detector as an evaluation value of the measurement surface; a second detector configured to detect a psychophysical quantity difference between positions separated by a predetermined distance in the captured image; and a determiner configured to perform error determination in a case where the psychophysical quantity difference between the position separated by the predetermined distance is equal to or larger than a predetermined difference.

In still another aspect of this disclosure, there is provided an improved method of evaluating characteristics of a measurement surface of a measurement object based on a psychophysical quantity of the measurement surface. The method incudes detecting, by a first detector, the psychophysical quantity of the measurement surface based on a captured image of the measurement surface; detecting, by a second detector, a psychophysical quantity difference between positions separated by a predetermined distance in the captured image; and performing, by a determiner, error determination in a case where the psychophysical quantity difference between the positions separated by the predetermined distance is equal to or larger than a predetermined difference.

In yet another aspect of this disclosure, there is provided an improved carrier means carrying computer readable code for controlling a computer to carry out: detecting, by a first detector, the psychophysical quantity of the measurement surface based on a captured image of the measurement surface; detecting, by a second detector, a psychophysical quantity difference between positions separated by a predetermined distance in the captured image; and performing, by a determiner, error determination in a case where the psychophysical quantity difference between the positions separated by the predetermined distance is equal to or larger than a predetermined difference.

According to the present disclosure, a wrong particle characteristic evaluation based on wrongly calculated particle characteristic evaluation value is prevented.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a hardware configuration diagram of an evaluation device according to a first embodiment of the present disclosure;
FIG. 2 is a functional block diagram of main functions of the evaluation device according to the first embodiment;
FIG. 3 is a cross-sectional view of a painted surface of a measurement sample including a luster material-containing coated film coated with a paint containing a luster material;
FIG. 4 is a diagram for describing an imaging form of the measurement sample;
FIG. 5 is a view illustrating a measurement image (captured image) of the normally captured measurement sample;
FIG. 6 is a view illustrating the measurement image after extraction of a particle region;
FIG. 7 is a diagram illustrating an imaging form of the measurement sample in which an inclination has occurred;
FIG. 8 is a view illustrating the measurement image of the measurement sample in which an inclination has occurred;
FIG. 9 is a view illustrating the measurement image of the measurement sample in which an inclination has occurred, after extraction of the particle region;
FIG. 10 is a characteristic graph in which an average luminance value is set as a threshold to a luminance value at each position of the measurement image;
FIG. 11 is a characteristic graph illustrating partial luminance values of the measurement image obtained by measuring the measurement sample in which an inclination has occurred;
FIG. 12 is a flowchart illustrating a flow of a measurement error notification operation in the evaluation device according to the first embodiment;
FIG. 13 is a characteristic graph of a case where the average luminance value is set as the threshold to the normally captured measurement image;
FIG. 14 is a characteristic graph of a case where the average luminance value is set as the threshold to the measurement image in which an inclination has occurred;
FIG. 15 is a view illustrating the measurement image including line flaws;
FIG. 16 is a view illustrating the measurement image including line flaws after extraction of the particle region;
FIG. 17 is a functional block diagram of main functions of an evaluation device according to a second embodiment;
FIG. 18 is a flowchart illustrating a flow of a measurement error notification operation in the evaluation device according to the second embodiment;
FIG. 19 is a chart in which areas of particle regions of a measurement image are formed into a histogram;
FIG. 20 is a functional block diagram of main functions of an evaluation device according to a third embodiment;
FIG. 21 is a flowchart illustrating a flow of a luminance value correction operation of a measurement image according to an inclination of a measurement sample in the evaluation device according to the third embodiment;
FIG. 22 is a characteristic graph illustrating luminance values corrected with correction coefficients corresponding to the inclination that has occurred in the measurement image;
FIG. 23 is a functional block diagram of main functions of an evaluation device according to a fourth embodiment;
FIG. 24 is a flowchart illustrating a flow of flaw region removal operation in the evaluation device according to the fourth embodiment; and
FIG. 25 is a chart in which areas of particle regions are formed into a histogram and for describing a flaw region determination technique based on the areas of the particle regions.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present disclosure. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

### (First Embodiment)

### (Hardware Configuration)

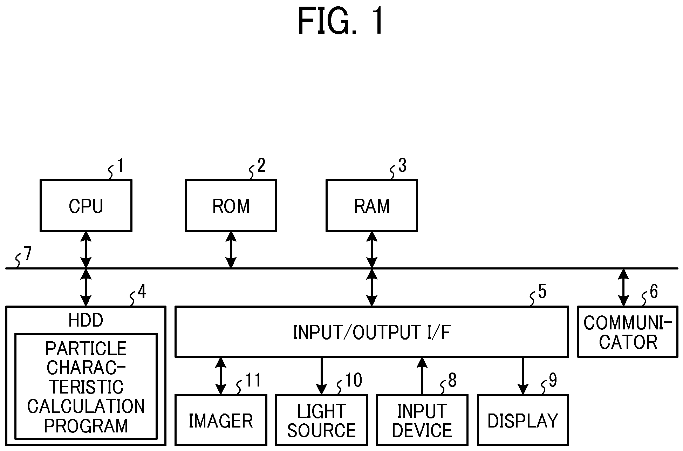

FIG. 1 is a hardware configuration diagram of an evaluation device according to a first embodiment. As illustrated in FIG. 1, the evaluation device includes a central processing unit (CPU) 1, a read only memory (ROM) 2, a random access memory (RAM) 3, a hard disk drive (HDD) 4, an input/output interface (input/output I/F) 5, and a communication device 6. The CPU 1 to the communicator 6 are communicatively connected to one another via a bus line 7.

An input device 8 such as a keyboard device, a mouse device, and the like and a display 9 such as a liquid crystal monitor device and the like are connected to the input/output I/F 5. The display 9 is an example of a notifier. Further, a light source 10 such as a light emitting diode (LED), which irradiates a measurement sample that serves as an object to be evaluated with light is connected to the input/output I/F 5. Further, an imager 11 that is a camera device using an imaging element such as a complementary metal oxide semiconductor (CMOS) image sensor or a charge coupled device (CCD) image sensor is connected to the input/output I/F 5.

The HDD 4 stores a particle characteristic calculation program (an example of an evaluation program) for quantifying and evaluating particle degree (glitter degree or luster degree) of the measurement sample as a particle characteristic. Note that, in this example, description will be given on the assumption that the particle characteristic calculation program is stored in the HDD 4. However, the particle characteristic calculation program may be stored in the ROM 2, the RAM 3, or another storage such as an external memory.

The CPU 1 executes the particle characteristic calculation program stored in the HDD 4, for example, to control an output of the particle characteristic detected based on the measurement image. As will be described in detail below, the CPU 1 issues an error notification in a case where the measurement image used for calculating the particle characteristic is a measurement image for which accurate evaluation of the particle characteristic is difficult. With the error notification, an inconvenience of performing inaccurate evaluation of the particle characteristic is prevented.

### (Functional Configuration Based on Particle Characteristic Calculation Program)

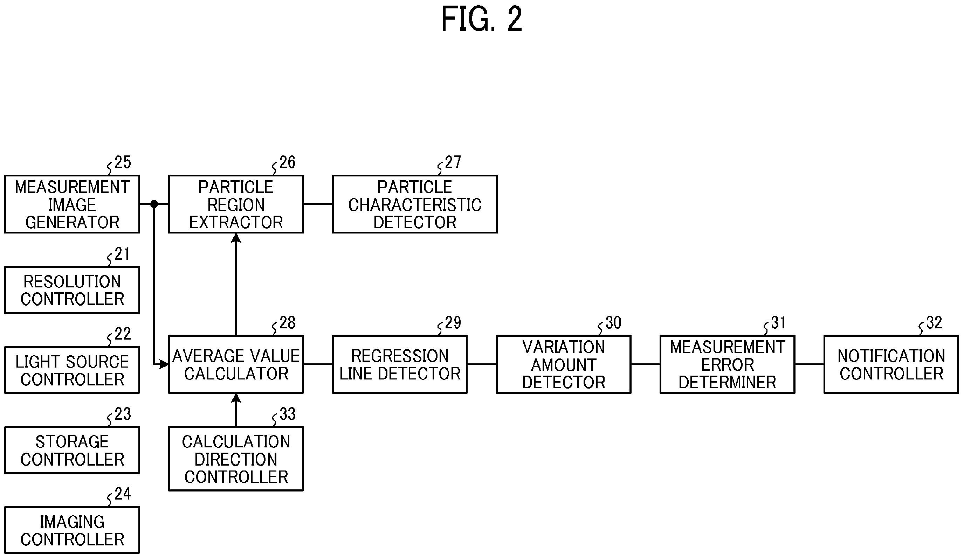

FIG. 2 is a functional block diagram of functions implemented by executing the particle characteristic calculation program by the CPU 1. As illustrated in FIG. 2, the CPU 1 executes the particle characteristic calculation program to implement functions of a resolution controller 21, a light source controller 22, a storage controller 23, an imaging controller 24, a measurement image generator 25, a particle region extractor 26 (an example of a first detector), a particle characteristic detector 27, and an average value calculator 28. Further, the CPU 1 executes the particle characteristic calculation program to implement a regression line detector 29, a variation amount detector 30, a measurement error determiner 31 (an example of a determiner), a notification controller 32, and a calculation direction controller 33. The regression line detector 29 and the variation amount detector 30 are an example of a second detector.

Note that the description will be given on the assumption that the resolution controller 21 to the calculation direction controller 33 are implemented by software. However, part or whole of the resolution controller 21 to the calculation direction controller 33 may be implemented by hardware such as an integrated circuit (IC).

Further, the particle characteristic calculation program may be provided by being recorded on a recording medium readable by a computer device, such as a compact disc (CD)-ROM or a flexible disk (FD), in an installable format or executable format file. Alternatively, the particle characteristic calculation program may be provided by being recorded on a recording medium readable by a computer device, such as a CD-R, a digital versatile disk (DVD), a Blu-ray Disc (registered trademark), or a semiconductor memory. Further, the particle characteristic calculation program may be provided in the form of being installed via a network such as the Internet. Further, the particle characteristic calculation program may be provided by being incorporated in advance in a ROM or the like in the device.

### (Luster Material-Containing Coated Film)

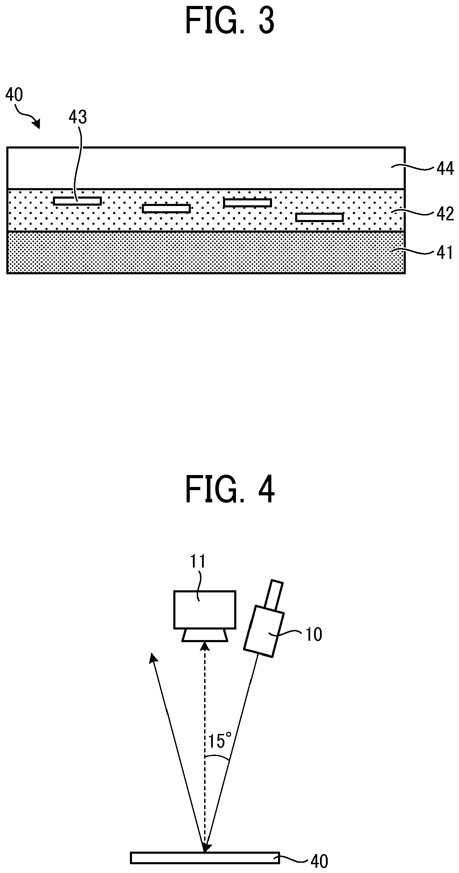

Here, FIG. 3 is a cross-sectional view of a painted surface of a measurement sample 40 including a luster material-containing coated film coated with a paint containing a luster material. The luster material-containing coated film is a coated film coated with a paint containing a luster material such as aluminum flakes, pearl powder, or a mica powder. The paint containing a luster material is used for painting frames of vehicles. A luster material 43 existing inside the luster material of the luster material-containing coated film reflects incident light, and the painted surface differs in appearance depending on a viewing angle.

The measurement sample 40 including a luster material-containing coated film has a layer structure illustrated in FIG. 3. After a base material such as a metal plate is formed or an undercoat layer (base 41) and the like are formed on the base material, a paint layer (base layer 42) containing the luster material 43 is formed. A mixed paint in which a color paint such as read or blue and the paint containing the luster material 43 are mixed may be used for the base layer 42, besides using the paint containing the luster material 43. A clear layer that is a transparent layer is formed on the base layer 42, whereby a typical structure of the measurement sample 40 containing a luster material-containing coated film is obtained.

In a case of evaluating the luster material-containing coated film, evaluation of the particle degree (luster degree) caused by the luster material 43 is significant. This particle degree is sensation that human beings recognize light reflected according to the type, size, density, arrangement, or the like of the luster material 43 contained in the paint via the retina, and is so-called rough degree or glitter degree of the appearance of the paint. Texture is also expressed as, for example, particle characteristic, gradation, image clarity, particle color, base color, or contrast difference.

Such particle degree can be evaluated in stages by human beings. However, in this case, the evaluation of the particle degree is subjective evaluation of a human who has performed eye measurement. For this reason, objective evaluation of the particle degree is required to implement the accuracy and quantitativeness of paint design and quality control.

The evaluation device of the first embodiment quantifies the evaluation of "the particle degree" which tends to be subjective as "particle characteristic" to objectively evaluate the particle degree.

### (Measurement of Measurement Sample)

FIG. 4 illustrates an imaging form of the measurement sample 40. In a case of evaluating the particle degree, the particle degree of the measurement sample 40 is evaluated based on a measurement image obtained by capturing (hereinafter referred to as measuring), by the imager 11, reflected light of light emitted on the measurement sample from the light source 10 In this case, it is desirable to perform measurement at an angle at which luster of particles can be easily measured. The luster of particles can be more easily measured as a measurement angle is closer to a regular reflection direction. Therefore, as illustrated in FIG. 4, when the luster of particles is measured at an angle inclined by 15°, for example, with respect to the regular reflection direction of the light source 10, unexpected appearance of the light source 10 can be prevented and the luster of particles can be favorably measured.

The following description will be given as an example on the assumption that luminance information that is one of psychophysical quantities is measured by the imager 11 as a camera device. However, any measuring instrument may be used as a measuring instrument that performs measurement as long as the measuring instrument can measure a two-dimensional psychophysical quantity. Therefore, an imaging device including a line sensor or the like may be used, for example, other than the imager 11. Another psychophysical quantity such as light flux information, light intensity information, illumination information, or light quantity information may be measured as the psychophysical quantity to be measured other than the luminance information.

Further, a resolution equal to or less than the size of the luster material 43 per pixel is favorable as the resolution of the imager 11. More specifically, in a case where the size of the luster material 43 is about 20 µm, for example, the resolution controller 21 illustrated in FIG. 2 controls the resolution of the imager 11 to be equal to or less than about 20 µm per pixel. With the control, the particles can be measured with high accuracy.

### (Measurement Image)

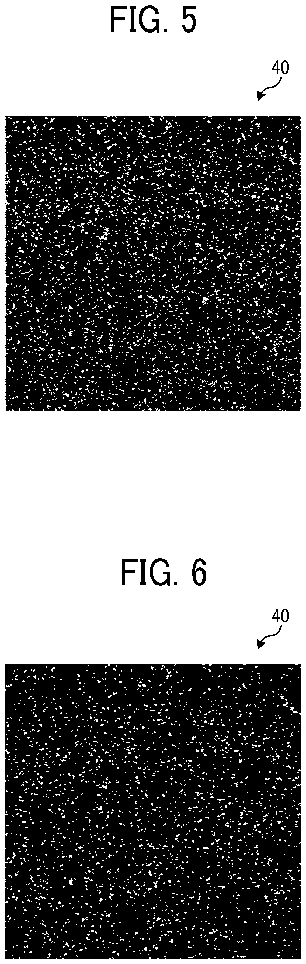

FIG. 5 illustrates an example of the measurement image obtained by measuring the measurement sample 40 by the imager 11 as a monochrome camera device. This measurement image has a size of 512 × 512 pixels in length × width and is measured by controlling the resolution to about 20 µm per pixel. In FIG. 5, white dots indicate particles reflecting light, and regions in black, gray, and white indicate higher luminance in the order of black, gray, and white.

In a case of extracting a particle region at the time of calculating the particle characteristic, pixels having an average luminance value or more are extracted as the particle region in the measurement image, for example. FIG. 6 illustrates an example of the measurement image from which the particle region is extracted with the average luminance value as a threshold. To facilitate understanding, in FIG. 6, regions other than the particle region are expressed with the luminance value of "0". The particle characteristic can be evaluated by a total of luminance values or an area of the particle region in the measurement image.

### (Measurement Image Where Inclination Has Occurred)

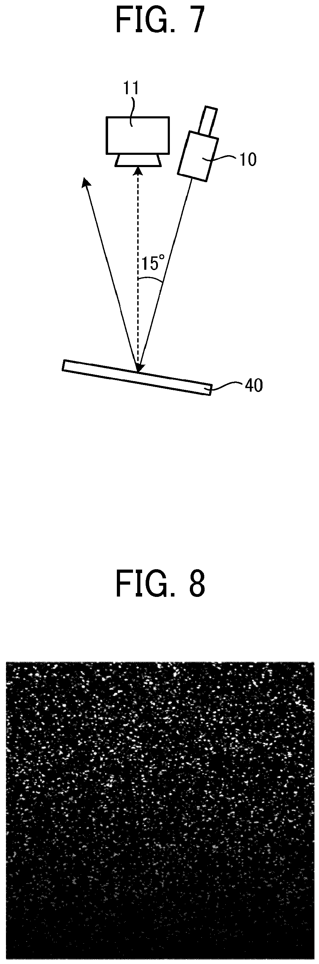

Here, correct extraction of the particle region is significant in the evaluation of the particle characteristic using the measurement image. FIG. 7 is a diagram illustrating a state in which the measurement sample 40 in an inclined state is measured. As illustrated in FIG. 7, in a case of measuring the measurement sample 40 in an inclined state, an obtained measurement image becomes a measurement image in which the luminance is biased, such as the luminance in a lower portion being lower than the luminance in an upper portion, as illustrated in FIG. 8, for example.

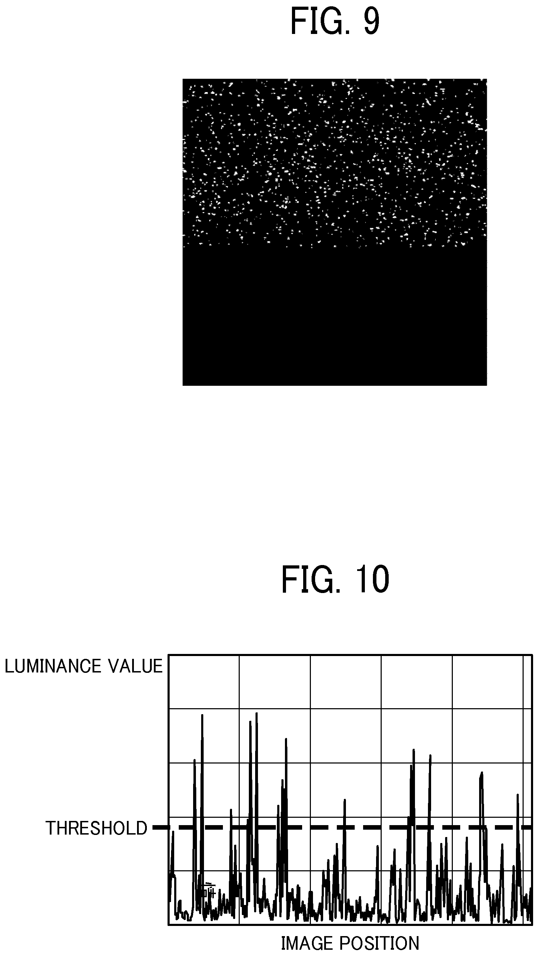

When processing of extracting pixels having luminance values equal to or less than the average luminance value as the particle region is applied to the measurement image with biased luminance, a measurement image in which the particle region does not substantially exist in a lower half is obtained as illustrated in FIG. 9. Note that, to facilitate understanding, in FIG. 9, regions (pixels) other than the particle region are expressed with the luminance value of "0". If the extraction of the particle region is performed in a biased manner in this way, accurate evaluation of the particle characteristic becomes difficult.

### (Separation of Particle Region Based on Average Luminance Value)

That is, FIG. 10 illustrates a line profile illustrating partial luminance values of the measurement image (normal measurement image) obtained by measuring the measurement sample 40 without an inclination. Further, the dotted line in FIG. 10 illustrates a threshold that is the average luminance value. The normal measurement image can be separated into a region with high particle luminance and a region with low particle luminance by dividing the line profile with the average luminance value as the threshold.

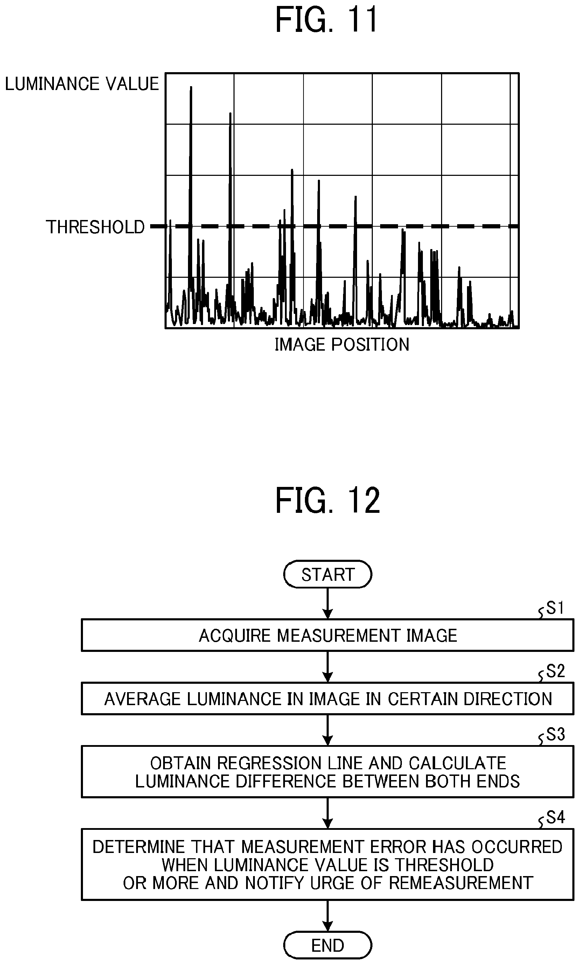

Meanwhile, FIG. 11 illustrates a line profile illustrating partial luminance values of the measurement image (inclined measurement image) obtained by measuring the measurement sample 40 with an inclination. When the average luminance value as the threshold is set to the inclined measurement image, as illustrated by the dotted line in FIG. 11, an inclined measurement image in which the particles do not substantially exist in a lower half is formed as illustrated in FIG. 9.

An evaluation result of the particle characteristic obtained based on such an inclined measurement image does not match a visual observation result of the measurement sample 40 and becomes an evaluation result with low reproducibility. Then, in a case where such an evaluation result is not noticed as the evaluation result with the inclined measurement image (in a case where a measurement error is not noticed), the evaluation result negatively affects an analysis or quality control afterward.

### (Measurement Error Notification Operation)

Given this situation, the evaluation device of the first embodiment detects and notifies a measurement error based on a variation amount of the average luminance value in a certain direction in luminance value distribution of the measurement image. FIG. 12 is a flowchart illustrating a flow of the measurement error notification operation. The CPU 1 of the evaluation device executes the functions illustrated in FIG. 2 based on the particle characteristic calculation program stored in the storage such as the HDD 4.

The flowchart in FIG. 12 is started by detecting a particle characteristic calculation instruction from a user by the CPU 11, the instruction being input via the input device 8. The CPU 1 executes processes in order from step S1. In step S1, in a case where the size of the luster material 43 of the measurement sample 40 is about 20 µm, for example, the resolution controller 21 illustrated in FIG. 2 controls the resolution of the imager 11 to be equal to or less than about 20 µm per pixel.

Further, in step S1, the light source controller 22 controls lighting of the light source 10 to irradiate the measurement sample 40 with light at the angle of 15°, as illustrated in FIG. 4. Further, in step S1, the imaging controller 24 controls the imager 11 to capture the measurement sample 40 irradiated with light from the light source 10. Further, in step S1, the storage controller 23 controls storage of the captured image of the measurement sample 40 captured by the imager 11 to the storage such as the RAM 3 or the HDD 4. Further, in step S1, the measurement image generator 25 generates a measurement image that is a luminance image from the captured image stored in the storage.

Next, in step S2, the calculation direction controller 33 sets a predetermined direction such as a horizontal direction to the average value calculator 28. The average value calculator 28 calculates the average luminance value that is an average of luminance values in a line in the predetermined direction such as a horizontal direction of the measurement image set by the calculation direction controller 33.

Note that the average luminance value calculated by the average value calculator 28 is supplied to the particle region extractor 26. The particle region extractor 26 separates the particle regions that are pixels having the average luminance value or more from the measurement image illustrated in FIG. 5, for example, to form the measurement image including pixels having the average luminance value or more, as illustrated in FIG. 6. The particle characteristic detector 27 detects, for example, total information of the luminance values of the pixels or particle area information indicating the area of the particle regions based on the measurement image including the particle regions having the average luminance value or more, as an evaluation value of the particle characteristic of the measurement image. This evaluation value is displayed on the display 9. As a result, evaluation information of the particle characteristic of the measurement image can be quantified and provided to the user.

Next, in step S3, the regression line detector 29 detects a regression line obtained by linearly fitting the average luminance value serving as the threshold to the luminance values of a line in a direction such as a horizontal direction by a least squares method, for example. Further, in step S3, the variation amount detector 30 detects a variation amount of the luminance values corresponding to both ends (or may be vicinities of the ends) of the fitted regression line (a luminance difference between the both ends of the regression line). In step S4, the measurement error determiner 31 determines that a measurement error of the measurement image has occurred in a case where the luminance difference between the both ends of the regression line is a predetermined threshold or more.

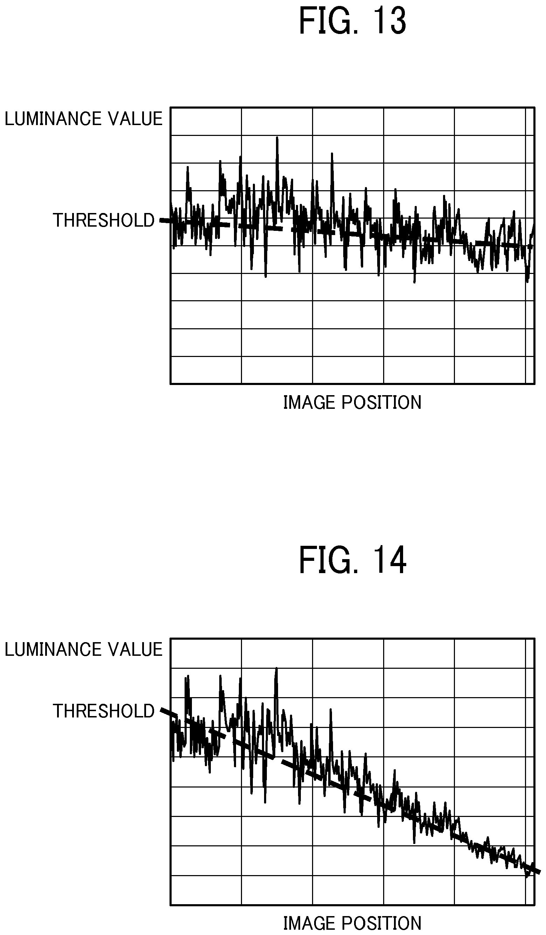

FIG. 13 illustrates a line profile illustrating the luminance values of a predetermined line of the measurement image (normal measurement image) obtained by measuring the measurement sample 40 without an inclination or the like. Further, the dotted line illustrated in FIG. 13 is the regression line (the average luminance value of the predetermined line) set as the threshold to the line profile by the regression line detector 29. In the case of the normal measurement image, there is no large difference (variation amount) between the both ends of the fitted regression line.

In contrast, in a case of an inclined measurement image obtained by measuring the measurement sample 40 with an inclination, the regression line is substantially inclined and fitted, as illustrated in FIG. 14, and therefore the difference between both ends of the regression line becomes a predetermined value or more. In a case where the measurement image generated by the measurement image generator 25 is a monochrome image of 8 bits (the luminance value of 0 to 255), the measurement error determiner 31 determines that the measurement has been performed in the state where the measurement sample 40 is inclined, and makes determination of the measurement error, when the variation amount detector 30 detects that the variation amount of the luminance values between the both ends of the fitted regression line is 20 or more. With the determination, the user can be urged to remeasure the measurement image, and accurate evaluation of the particle characteristic becomes possible.

### (Case where Measurement Surface is Curved Surface)

In this example, the error determination of the measurement image is made in the case where accurate evaluation of the particle characteristic is difficult due to the inclination of a measurement surface of the measurement sample 40 with respect to a capture direction of the imager 11, the error determination of the measurement image can be similarly applied to a case where the measurement surface of the measurement sample 40 is a curved surface.

That is, in a case where the measurement surface of the measurement sample 40 is a curved surface, the regression line detector 29 calculates a threshold that is an average value of a maximum value and a minimum value of the luminance values of a line in a horizontal direction of the curved surface. Further, the regression line detector 29 fits the calculated threshold to the luminance values of a line in a horizontal direction of the curved surface, using a quadratic function, for example. Note that a moving average line may be fitted to the luminance values of the line in the horizontal direction of the curved surface, other than fitting the calculated threshold.

The variation amount detector 30 detects a difference between the maximum value and the minimum value of the luminance values of the line fitted according to a curvature of the curved surface of the measurement surface. The measurement error determiner 31 determines the measurement error on the ground that accurate measurement of the particle characteristic is difficult in a case where the difference between the maximum value and the minimum value is a predetermined difference or more.

For example, an exterior of a car has many curved surfaces, and the accurate evaluation of the particle characteristic is difficult. However, as in the evaluation device of the first embodiment, the determination of the measurement error caused by a curved surface can urge the user to remeasure the measurement image, thereby to improve the accuracy of the evaluation of the particle characteristic.

Next, in step S4, the notification controller 32 controls display of an error message such as "Please remeasure the measurement sample" on the display 9 as an example of a notifier when the measurement error is determined by the measurement error determiner 31. Further, the particle characteristic detector 27 stops the evaluation operation of the particle characteristic in the case where the measurement error is determined by the measurement error determiner 31.

The user adjusts the inclination of the measurement sample 40 and the like and remeasures the measurement sample 40 with the imager 11 when the error message is displayed on the display 9. With the process, the accurate evaluation of the luster material-containing coated film of the measurement sample 40 becomes possible. In other words, in the case where the measurement error is determined, the particle characteristic detector 27 does not calculate the particle characteristic, and the particle degree cannot be accurately evaluated due to the inclination or the curvature of the measurement image. Therefore, the error message having content urging remeasurement with a corrected inclination or curvature is displayed on the display 9. With the process, an inconvenience of evaluating the measurement surface of the measurement image based on the wrong particle characteristic can be prevented.

Note that, in the description of the embodiment, evaluation of the luster material-containing coated film has been described. However, the above measurement error determination may be made in evaluation for a so-called solid coated film that is a coated film not including the luster material. In the case of the solid coated film, a color is evaluated instead of the evaluation of the particle degree. In the measurement image measured in the state where the measurement sample is inclined, accurate evaluation of the color becomes difficult due to substantial variation of the luminance value in the image. However, performing the above measurement error determination can prevent an inconvenience of performing inaccurate color evaluation.

### (Effects of the First Embodiment)

As is clear from the above description, the evaluation device of the first embodiment fits, for example, the threshold such as the average value to the psychophysical quantities (for example, the luminance values) in a predetermined line of the measurement image. Then, in a case where the difference between both ends of the fitted thresholds is a predetermined value or more, the measurement error of the measurement sample from which the measurement image has been obtained is determined, and the evaluation operation of the particle characteristic is stopped and the notification operation notifying occurrence of the measurement error is performed.

With the configuration, an inconvenience of performing wrong particle characteristic evaluation based on the particle characteristic calculated from the measurement image where a measurement error has occurred can be prevented.

### (Second Embodiment)

Next, an evaluation device according to a second embodiment will be described. The evaluation device according to the second embodiment is an example of performing a notification of a measurement error in a case where a predetermined number or more of line flaws is detected from a measurement image. Note that the second embodiment to be described below is different from the first embodiment in this point. Therefore, the difference between the two embodiments will be described below, and redundant description will be omitted.

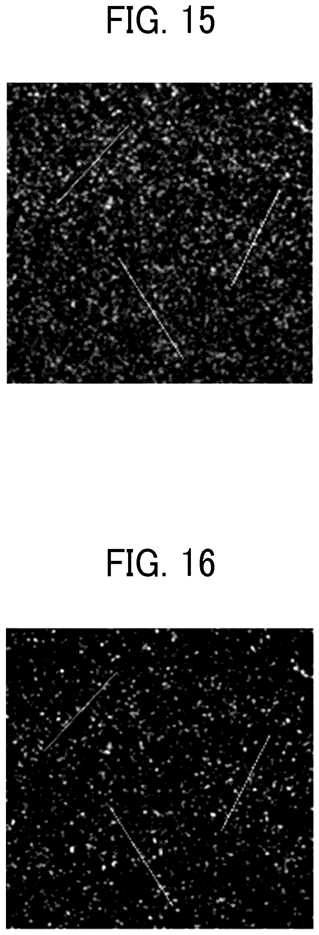

First, FIG. 15 illustrates an example of a measurement image in which a plurality of line flaws has occurred. A luminance value of a region corresponding to the flaw indicates a high luminance value. Therefore, when a particle region is extracted with an average luminance value as a threshold, the regions corresponding to the flaws are erroneously extracted as the particle regions with a high probability, as illustrated in FIG. 16. That is, as can be seen by comparing FIG. 15 with FIG. 16, when the particle regions are extracted with the average luminance value as a threshold, the regions corresponding to the flaws are almost extracted as they are. Therefore, a particle characteristic is evaluated based on the measurement image including flaws, and therefore accurate evaluation becomes difficult.

### (Functions of Second Embodiment)

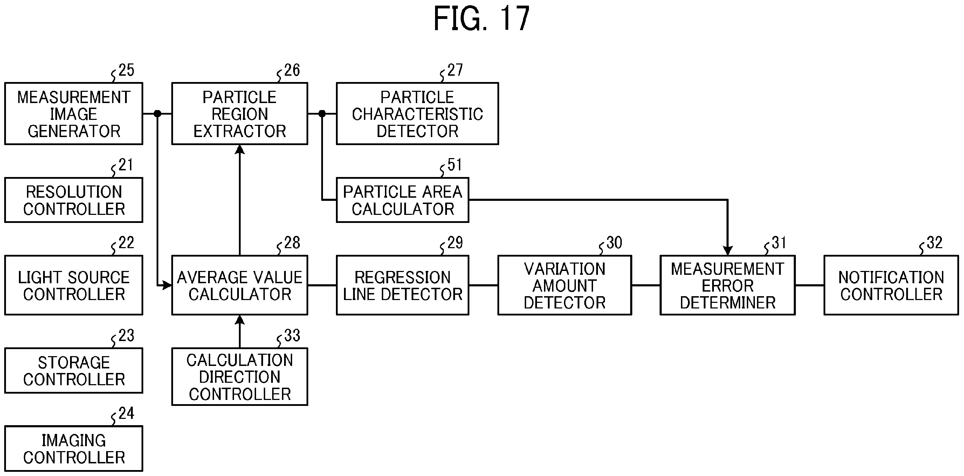

FIG. 17 is a functional block diagram of functions implemented when a CPU 1 of the evaluation device of the second embodiment executes a particle characteristic calculation program stored in a storage such as an HDD 4. In FIG. 17, the same reference numerals are given to portions exhibiting the same operations as in FIG. 2 used in the description of the first embodiment. As can be seen from FIG. 17, in the case of the evaluation device of the second embodiment, a particle area calculator 51 that calculates an area of a region corresponding to a flaw based on a particle region extracted from the measurement image by a particle region extractor 26 is included.

That is, the flaw can be detected based on the particle area of the particle region extracted from the measurement image. Normally, the area of the particle region becomes sometimes large because about two or three particle regions other than the flaws are combined. However, combination of a larger number of particle regions is rare. The same applies to a case where a blending amount of a luster material increases. Therefore, even when the amount of the luster material increases and the light quantity reflected by a painted surface increases, detection of a large number of combined particle regions is rare.

In the evaluation device of the second embodiment, the particle area calculator 51 calculates an area of particles regarded as one group, which is formed by a plurality of particle regions having the luminance values that are equal to or larger than the threshold and combined with one another. Then, in a case where the particle area calculated by the particle area calculator 51 is a predetermined value or more, a measurement error determiner 31 determines the particle region corresponding to the particle area calculated by the particle area calculator 51 as a region corresponding to a flaw.

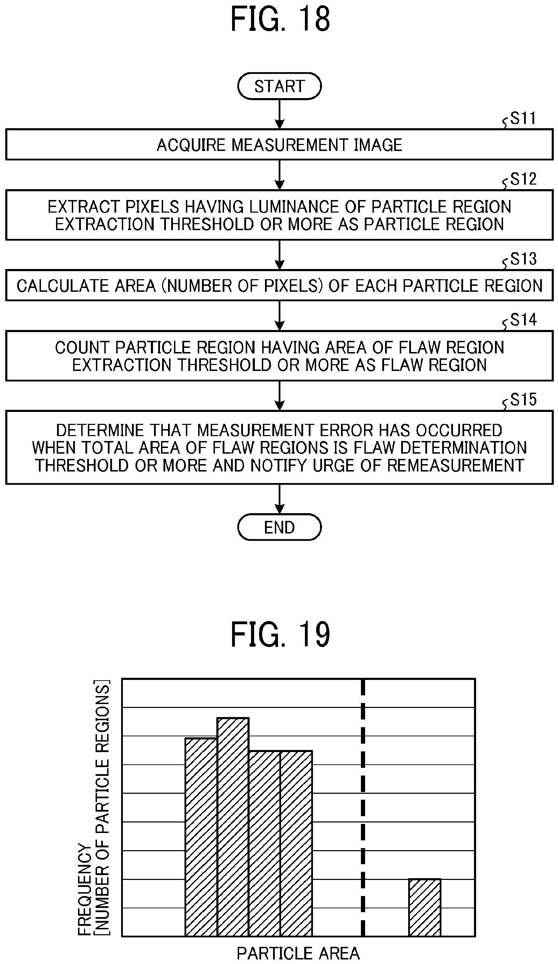

FIG. 18 is a flowchart illustrating a flow of a measurement error notification operation in the second embodiment. In this flowchart, in step S11, a measurement image generator 25 acquires a luminance image formed from a captured image of a measurement sample 40 as a measurement image, for example. In step S12, a particle region extractor 26 extracts pixels having luminance that is equal to or larger than the average luminance value set by an average value calculator 28 as the particle region.

In step S13, the particle area calculator 51 calculates the area (or the number of pixels) of each particle region extracted by the particle region extractor 26. In step S14, the measurement error determiner 31 counts the particle region having the area that is equal to or larger than a predetermined threshold (flaw region extraction threshold), of the particle regions having the areas calculated by the particle area calculator 51, as the region corresponding to a flaw.

FIG. 19 is a chart in which the areas of the particle regions are formed into a histogram, having the horizontal axis as the particle area and the vertical axis as the frequency (the number of particle regions). In FIG. 19, the dotted line is the flaw region extraction threshold, and the particle region having the area that is equal to or larger than the flaw region extraction threshold is determined as a flaw. In step S15, the measurement error determiner 31 adds the areas equal to or larger than the flaw region extraction threshold and the areas of the particle regions regarded as one group, thereby to calculate a total area of flaw regions. Then, in a case where the total area of the flaw regions is equal to or larger than a flaw determination threshold, the measurement error determiner 31 determines that the measurement image is a measurement image in which a measurement error has occurred, by which accurate evaluation of the particle characteristic is difficult.

A particle characteristic detector 27 stops the evaluation of the particle characteristic of the measurement image when the measurement error determiner 31 determines the measurement error. Further, a notification controller 32 displays, on a display 9, a measurement error notification urging a user to perform remeasurement, such as "The particle characteristic cannot be accurately evaluated because flaws are detected in the measurement image. Please change the region to be measured and remeasure the region". With the process, an inconvenience of performing inaccurate evaluation of the particle characteristic of a measurement surface based on an inaccurate measurement image can be prevented.

### (Effects of Second Embodiment)

A coated film having a small blending amount of a luster material or a coated film with weak luster of particles has a larger area of the flaw regions than the area of the particle regions. Also, the luminance value of the flaw region is much higher than the luminance value of the particle region. Therefore, the flaw greatly influences the evaluation of the particle characteristic. Since the evaluation device of the second embodiment can avoid the influence of such flaws, the inconvenience of inaccurately evaluating the particle characteristic of the measurement image can be prevented. In addition, effects similar to the effects in the first embodiment can be obtained.

### (Third Embodiment)

Next, an evaluation device of the third embodiment will be described. The evaluation device according to the third embodiment is an example of performing particle region extraction processing after applying luminance value correction processing according to an inclination of a measurement sample 40 to a measurement image, thereby to enable accurate evaluation of a particle characteristic. Note that the third embodiment is different from the above embodiments in this point. Therefore, the difference between the third embodiment and the above embodiments will be described below, and redundant description will be omitted.

### (Functional Configuration of Third Embodiment)

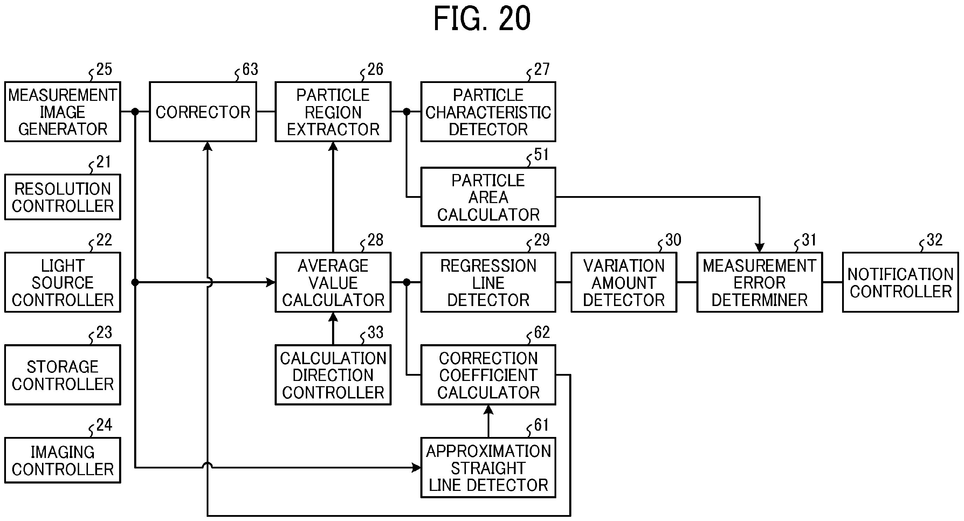

FIG. 20 is a functional block diagram of functions implemented when a CPU 1 of the evaluation device of the third embodiment executes a particle characteristic calculation program stored in a storage such as an HDD 4. As illustrated in FIG. 20, the evaluation device of the third embodiment includes an approximation straight line detector 61, a correction coefficient calculator 62, and a corrector 63.

The approximation straight line detector 61 detects an approximation straight line of averaged luminance values. The correction coefficient calculator 62 calculates a correction coefficient of the luminance values based on a ratio of an average luminance value to a value of the approximation straight line. The corrector 63 corrects each luminance value of the measurement image based on the calculated correction coefficient. A particle region extractor 26 extracts a particle region from the measurement image with the corrected luminance values. With the process, the particle characteristic can be accurately extracted and accurate evaluation of the particle characteristic becomes possible.

### (Measurement Image Correction Operation)

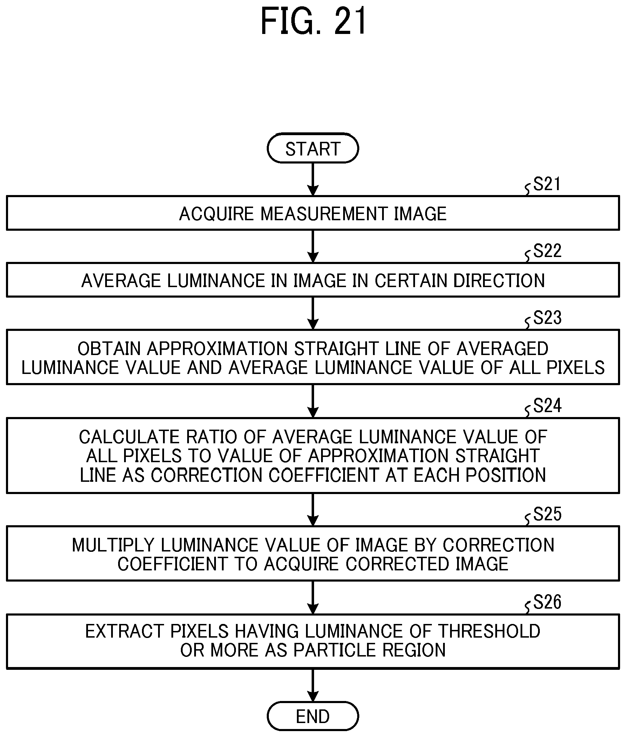

A flow of a measurement image correction operation in the evaluation device of the third embodiment is illustrated in the flowchart in FIG. 21. When the measurement image that is a luminance image generated by a measurement image generator 25 is acquired in step S21 in the flowchart, the approximation straight line detector 61 averages the luminance values in the measurement image in a certain direction in step S22. Further, in step S23, the approximation straight line detector 61 detects an approximation straight line (Y = ax + b) of the averaged luminance value. Further, in step S23, an average value calculator 28 calculates an average luminance value (C) of all of pixels (or pixels in a predetermined range) of the measurement image.

In step S24, the correction coefficient calculator 62 calculates a ratio (C/ax + b) of the average luminance value of all the pixels to the value at each position of the approximation straight line, as the correction coefficient of the luminance value at each position. In step S25, the corrector 63 multiplies each luminance value of the measurement image by the calculated correction coefficient to correct each luminance value of the measurement image. That is, in a case where the approximation straight line is formed based on the luminance values in a horizontal direction of the measurement image, the corrector 63 multiplies all the pixels in the horizontal direction by the correction coefficients to correct the luminance values. With the correction, the measurement image in which luminance variation due to the inclination of the measurement sample 40 has been corrected can be obtained.

A particle region extractor 26 forms the measurement image by extracting the particle region from the measurement image with the corrected luminance values, using the average luminance value calculated by the average value calculator 28 as described above as a threshold (step S26).

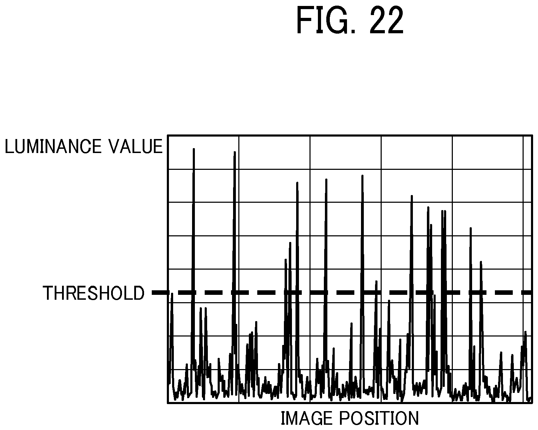

When the partial luminance values of the measurement image obtained by measuring the measurement sample with an inclination as illustrated in FIG. 11 are corrected with the above correction coefficients, the correction processing result illustrated in FIG. 22 can be obtained, for example. As can be seen by comparing FIG. 11 with FIG. 12, the inaccurate luminance values due to the inclination that has occurred in the measurement sample 40 can be corrected to accurate luminance values by the above correction processing. Therefore, the particle region is accurately extracted with the threshold of the average luminance value illustrated by the dotted line in FIG. 22, and accurate evaluation of the particle characteristic becomes possible.

Note that, in this example, the case where the inclination has occurred in the measurement sample 40 has been described as an example. However, the particle region can be similarly extracted with accuracy even in a case where the measurement sample 40 has a curvature.

### (Effects of Third Embodiment)

As is clear from the above description, the evaluation device of the third embodiment generates the measurement image with corrected luminance variation, the luminance variation having been caused by the inclination or the curvature of the measurement sample 40, and extracts the particle region based on the corrected measurement image. With the process, the particle characteristic can be accurately evaluated based on the accurately extracted particle region. In addition, effects similar to the effects in the above embodiments can be obtained.

### (Fourth Embodiment)

Next, an evaluation device of a fourth embodiment will be described. The above second embodiment is a case of determining that the measurement error of the measurement image has occurred in the case where the area of the region corresponding to a flaw is a predetermined area or more. In contrast, the evaluation device according to the fourth embodiment is an example of excluding a region corresponding to a flow in a measurement image to enable accurate evaluation of a particle characteristic without being affected by the flaw.

### (Functional Configuration of Fourth Embodiment)

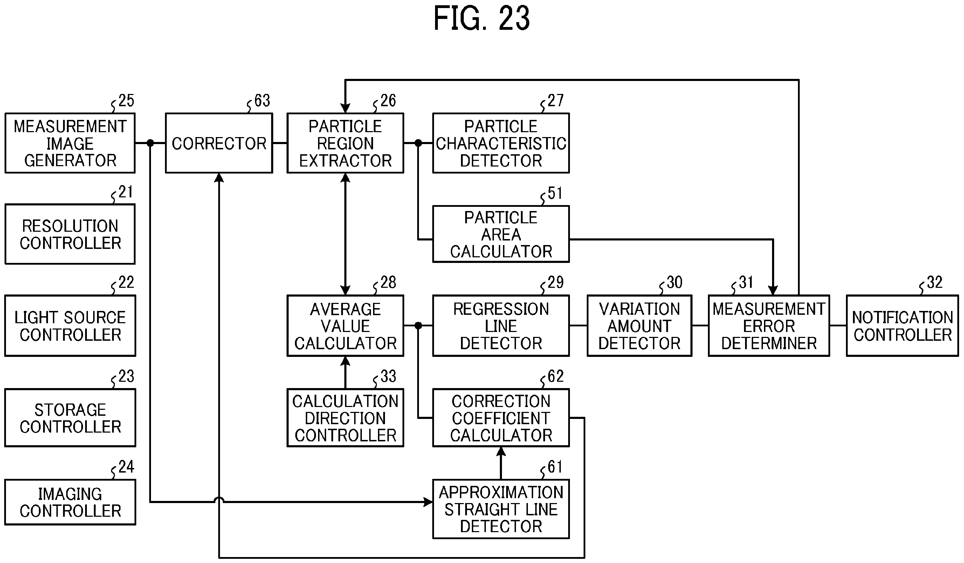

FIG. 23 is a functional block diagram of functions implemented when a CPU 1 of the evaluation device of the fourth embodiment executes a particle characteristic calculation program stored in a storage such as an HDD 4. As illustrated in FIG. 23, in the evaluation device of the fourth embodiment, a measurement error determiner 31 notifies a particle region extractor 26 of positional information of the region corresponding to a flaw, thereby to form the measurement image excluding the region corresponding to a flaw. Then, the particle region is extracted again based on the measurement image excluding the region corresponding to a flaw. With the process, the particle characteristic can be evaluated in the particle region corresponding to a luminance value of a luster material 43, excluding the luminance value corresponding to the flaw. Therefore, the accuracy of evaluation of the particle characteristics can be improved.

### (Removal of Luminance Value Corresponding to Flaw and Particle Region Extraction Operation)

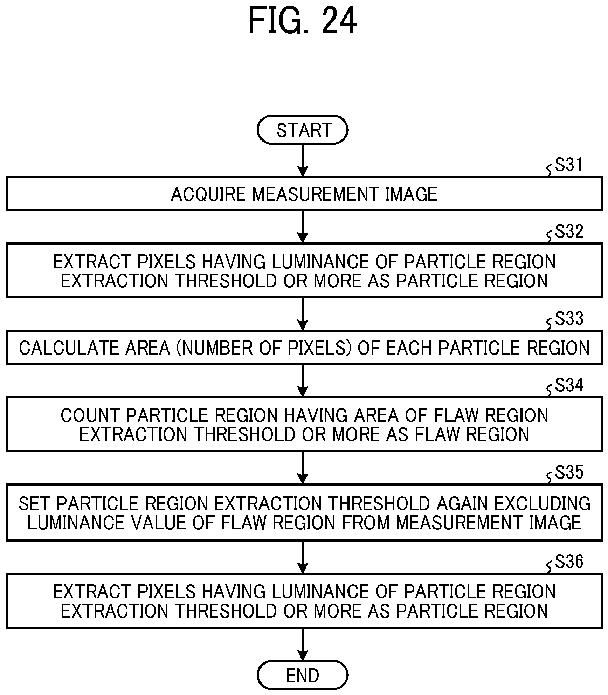

FIG. 24 is a flowchart illustrating a flow of removal of a luminance value corresponding to a flaw and a particle region extraction operation. In this flowchart, in step S31, a measurement image that is a luminance image generated in a measurement image generator 25 is acquired. This measurement image is directly supplied from the measurement image generator 25 to a particle region extractor 26, or, as described in the third embodiment, is supplied to the particle region extractor 26 after correction processing of a luminance value corresponding to an inclination or a curvature of a measurement sample 40 is applied by a corrector 63.

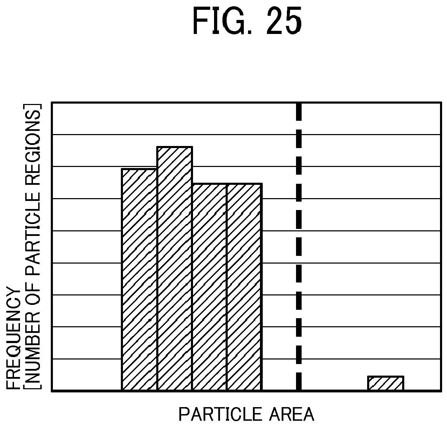

First, in step S32, the particle region extractor extracts pixels having luminance that is equal to or larger than a particle region extraction threshold as a particle region, using an average luminance value as the particle region extraction threshold. In step S33, a particle area calculator 51 calculates the area of each particle region. FIG. 25 is a chart in which the particle areas in the measurement image are formed into a histogram, similarly to FIG. 19, and the dotted line in FIG. 25 is a flaw region extraction threshold. In step S34, the measurement error determiner 31 detects the particle region having the flaw region extraction threshold or more as the region corresponding to a flaw. Further, the measurement error determiner 31 supplies address information = flaw positional information) on the measurement image, of the region corresponding to a flaw, to the particle region extractor 26.

In step S35, the particle region extractor 26 removes the particle region (excludes the luminance value) at the position indicated by the positional information of the flaw from the measurement image. The particle region extractor 26 supplies the measurement image from which the luminance value corresponding to the flaw has been excluded to an average value calculator 28. The average value calculator 28 calculates the average luminance value based on the measurement image from which the luminance value corresponding to the flaw has been excluded, and notifies the particle region extractor 26 of the average luminance value. In step S36, the particle region extractor 26 extracts the particle region from the measurement image from which the luminance value corresponding to the flaw has been excluded, using the notified average luminance value as the particle region extraction threshold.

### (Effects of Fourth Embodiment)

With the process, a particle characteristic detector 27 can evaluate the particle characteristic based on the measurement image from which the flaw has been excluded, and accurate evaluation of the particle characteristic without being affected by the flaw becomes possible.

Further, for example, in a case where there is a substantial difference between the luminance value of the particle region of the measurement image and the luminance value corresponding to the flaw, if the particle region is extracted using an average luminance value including the luminance value of the flaw region as the threshold, the particle region extraction threshold to be set does not become a favorable value due to the influence of the flaw, and accurate extraction of the particle region becomes difficult.

However, in the case of the evaluation device of the fourth embodiment, the average luminance value is calculated based on the measurement image from which the region corresponding to the flaw has been excluded, and the particle region is extracted from the measurement image from which the region corresponding to the flaw has been excluded using the average luminance value as the threshold. Therefore, the threshold that is a favorable value to the measurement image can be set, and the accurate extraction of the particle region becomes possible. Even when the measurement sample 40 has a flaw, more accurate evaluation of the particle characteristic than the evaluation including the flaw becomes possible.

### (Modification)

Finally, the above embodiments have been presented as examples, and are not intended to limit the scope of the present disclosure. These novel embodiments can be implemented in various other forms and various omissions, substitutions, and changes can be made without departing from the gist of the disclosure.

For example, in the above description of the embodiments, the example in which the present disclosure is applied to the evaluation device has been described. However, the present disclosure can also be applied to an image forming apparatus such as a multifunction peripheral having one or a plurality of image forming functions including a copy function, a printer function, a facsimile function, and a scanner function, a copying machine, or a printer device. Even in this case, effects similar to the above can be obtained. Further, the present disclosure may be applied to, for example, a projector device, a video conference system, a digital camera device or the like, other than the image forming apparatus.

Further, the above embodiments can be carried out by a device constituted by connecting conventional circuit modules, in addition to application specific integrated circuits (ASIC) by an engineer having ordinary knowledge in the field of information processing technology.

Such embodiments and modifications of the embodiments are included in the scope and gist of the invention and are included in the invention described in the claims and its equivalents.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

Although the embodiments of the present disclosure have been described above, the present disclosure is not limited to the embodiments described above, but a variety of modifications can naturally be made within the scope of the present disclosure. Numerous additional modifications and variations are possible in light of the above teachings. It is therefore to be understood that within the scope of the appended claims, the embodiments may be practiced otherwise than as specifically described herein. For example, elements and/or features of different illustrative embodiments may be combined with each other and/or substituted for each other within the scope of this disclosure and appended claims.

## Claims

1. An evaluation device for performing characteristic evaluation of a measurement surface of a measurement object based on a psychophysical quantity of the measurement surface, the evaluation device comprising:
a first detector (26) configured to detect the psychophysical quantity of the measurement surface based on a captured image of the measurement surface;
a second detector (29, 30) configured to detect a psychophysical quantity difference between positions separated by a predetermined distance in the captured image; and
a determiner (31) configured to perform error determination in a case where the psychophysical quantity difference between the positions separated by the predetermined distance is equal to or larger than a predetermined difference.

2. The evaluation device according to claim 1, further comprising:
a notification controller (32) configured to control a notifier (9) to perform a notification operation when the error determination is performed by the determiner (31).

3. The evaluation device according to claim 1 or 2,
wherein the second detector (29, 30) includes:
a fitting processor configured to fit a line of an average value of the psychophysical quantities on a line in a horizontal direction of the captured image to the psychophysical quantities on the line in the horizontal direction; and
a variation amount detector (30) configured to detect a difference between the psychophysical quantities corresponding to both ends of the fitted line or a difference between the psychophysical quantities in vicinities of the both ends of the fitted line, as the psychophysical quantity difference between the positions separated by the predetermined distance.

4. The evaluation device according to claim 3,
wherein, in a case where the measurement surface has a curvature,
the fitting processor fits a threshold corresponding to a curved surface to the psychophysical quantities on a line in a horizontal direction of the curved surface,
the variation amount detector (30) detects a difference between a maximum value and a minimum value of the psychophysical quantities on the line fitted to the curved surface, and
the determiner (31) performs the error determination in a case where the difference between the maximum value and the minimum value of the psychophysical quantities on the line in the horizontal direction is equal to or larger than a predetermined difference.

5. The evaluation device according to any one of claims 1 to 4, further comprising:
a third detector configured to detect pixels having the psychophysical quantity equal to or larger than a threshold from the captured image; and
an area calculator (51) configured to calculate an area of pixels regarded as one group, of the pixels having the psychophysical quantity equal to or larger than the threshold,
wherein the determiner (31) performs the error determination in a case where the area calculated by the area calculator (51) is equal to or larger than a predetermined area.

6. The evaluation device according to claim 5,
wherein the area calculator (51) notifies the first detector (26) of positional information on the captured image, the positional information corresponding to the pixels having the area equal to or larger than the predetermined area and regarded as one group, and
the first detector (26) detects the psychophysical quantity after excluding the pixels corresponding to the notified positional information, of pixels of the measurement image.

7. The evaluation device according to any one of claims 1 to 5, further comprising:
a fourth detector configured to average the psychophysical quantities corresponding to pixels in a predetermined direction of the captured image, detect an approximation straight line of the averaged psychophysical quantities, and detect an average value of the psychophysical quantities of all the pixels or pixels in a predetermined range of the captured image;
a correction coefficient calculator (62) configured to calculate a ratio of the average value of the psychophysical quantities of all the pixels or the pixels in a predetermined range to a value at each position of the approximation straight line, as a correction coefficient of the psychophysical quantity at each position; and
a corrector (63) configured to multiply each psychophysical quantity of the measurement image by the correction coefficient to correct each psychophysical quantity of the measurement image.

8. The evaluation device according to any one of claims 1 to 7,
wherein the psychophysical quantity is a luminance value.

9. An image measurement device comprising:
the evaluation device of any one of claims 1 to 8;
an imager (11) configured to capture a captured image of a measurement surface of a measurement object; and
an evaluator configured to output the psychophysical quantity detected by the first detector (26) as an evaluation value of the measurement surface.

10. A method of evaluating characteristics of a measurement surface of a measurement object based on a psychophysical quantity of the measurement surface, the method comprising:
detecting, by a first detector (26), the psychophysical quantity of the measurement surface based on a captured image of the measurement surface;
detecting, by a second detector (29, 30), a psychophysical quantity difference between positions separated by a predetermined distance in the captured image; and
performing (S4), by a determiner (31), error determination in a case where the psychophysical quantity difference between the positions separated by the predetermined distance is equal to or larger than a predetermined difference.

11. The method according to claim 10, further comprising performing a predetermined notification operation when the error determination is performed by the determiner (31).

12. A carrier means carrying computer readable code for controlling a computer to carry out the method of claim 10 or 11.
